# EUROPEAN PATENT SPECIFICATION

(11) **EP 4 083 582 B1**
(45) Date of publication and mention of the grant of the patent: **16.04.2025**
(21) Application number: 22170913.2
(22) Date of filing: 29.04.2022
(51) Int. Cl.: G01F 23/16, G01F 25/20

(54) **A MONITORING SYSTEM FOR LIQUID LEVEL DETECTION IN A TANK**
ÜBERWACHUNGSSYSTEM ZUR FLÜSSIGKEITSSTANDDETEKTION IN EINEM TANK
SYSTÈME DE SURVEILLANCE DE DÉTECTION DE NIVEAU DE LIQUIDE DANS UN RÉSERVOIR

(30) Priority: 30.04.2021 IT 202100011093
(43) Date of publication of application: 02.11.2022
(73) Proprietor: Watgrid, SA, 3830-352 Ilhavo (PT)
(72) Inventor: DOMINGUES GONÇALVES, Fábio Patrício, 3830-352 ILHAVO (PT); ESTIMA DA COSTA, Pedro, 3830-352 ILHAVO (PT); GONÇALVES MALHEIRO, Licínio João, 3830-352 ILHAVO (PT); VENTURA DE SOUSA E CARVALHO PEREIRA, Ricardo José, 3830-352 ILHAVO (PT); PIRES DUARTE, Daniel André, 3830-352 ILHAVO (PT); NOGUEIRA, Rogério Nunes, 3830-352 ILHAVO (PT); BOTAS BILRO, Lúcia Maria, 3830-352 ILHAVO (PT)
(74) Representative: Studio Torta S.p.A.

(56) References cited:
- CN-A- 102 080 980
- FR-A1- 2 564 969
- FR-A1- 2 932 259
- US-A1- 2004 016 457

## Description

### CROSS-REFERENCE TO RELATED APPLICATIONS

This Patent Application claims priority from Italian Patent Application No. 102021000011093 filed on April 30, 2021.

### TECHNICAL FIELD OF THE INVENTION

The present invention relates to a monitoring system for liquid level detection in a tank.

In various technical areas, it is necessary to detect the level of liquid in a tank.

### STATE OF THE ART

For example, in flush cisterns for sanitary appliances, the need arises, especially in order to avoid waste and reduce water consumption, to accurately control the amount of water in the cistern, so as to detect any leaks, monitor consumption, etc.

Similar problems are found in other industries and applications, and with different liquids. Patent application FR 2 564 969 A1 discloses examples of monitoring systems to detect the level of water in a well.

In many cases, placing level sensors inside a tank can be difficult, due to accessibility issues, tank size, etc.

A particularly relevant problem is the need to keep a level sensor inserted in a tank calibrated. In general, level sensors require periodic calibration to be fully efficient and reliable. But calibration requires an operator.

The present invention set out to resolve the problems highlighted above; in particular, one purpose of the invention is to provide a monitoring system for liquid level detection in a tank that can be easily and economically adapted to various applications and installation situations.

It is a further purpose of the invention to provide a universal intelligent system that, regardless of the specific installation, is able to adapt and self-adjust to the installation conditions without the need for operator intervention.

### SUBJECT AND SUMMARY OF THE INVENTION

The present invention therefore relates to a monitoring system for liquid level detection in a tank as defined in essential terms in the appended claim 1 and, in its additional characters, in the dependent claims.

In essence, the system of the invention combines (at least) one pressure sensor and two optical sensors. The pressure sensor measures the pressure at the bottom of the tank where the system is installed (preferably through a sealed pipe). The optical sensors measure the presence of liquid in two predetermined spatial positions, for example corresponding to a maximum filling level of the tank and an empty tank level.

In this way, the pressure sensor receives indications of two known reference conditions. This ensures that the pressure sensor is constantly calibrated via the optical sensors each time a tank emptying and filling cycle occurs, reducing the risk of needing recalibration.

With this architecture, the pressure sensor, designed to measure the liquid level in the tank, is completely autonomous and does not require periodic manual calibration and provides level measurements with high accuracy (with deviations +/- 0.2 mm).

The system of the invention is thereby suitable for equipping a wide variety of tanks, particularly subject to filling and emptying cycles such as, for example, flushing cisterns for sanitary appliances.

The system of the invention may also be configured to transmit a variety of additional information to the user, such as the presence of operating problems, history of filling and emptying events, and so forth.

Advantageously, then, all the parts of the system are provided with an IP67 equivalent degree of protection, which makes the system more resistant and durable than other solutions of the prior art.

In addition, the system can be integrated into an articulated support body so that it can be inserted into a tank even with a small access opening, as is the case for example (but not only) with sanitary appliance flush cisterns. The system of the invention thus allows a universal installation, in all types of flushing cisterns (built-in, external, ceramic, etc.), being also easily installed and removable from any type of tank.

All the materials in the system can then be selected to have high durability.

### BRIEF DESCRIPTION OF THE DRAWINGS

Further characteristics and advantages of the present invention will become clear from the following description of a non-limiting example of an embodiment made with reference to the appended drawings, wherein:
- Figure 1 is a front schematic view of a tank equipped with a monitoring system for liquid level detection in a tank according to the invention;
- Figure 2 is a perspective view of the system in figure 1;
- Figure 3 is an exploded perspective views, with parts removed for clarity, of the system in figure 2;
- Figure 4 is a perspective view of a detail of the system in figure 2.

### DETAILED DESCRIPTION OF PREFERRED EMBODIMENTS OF THE INVENTION

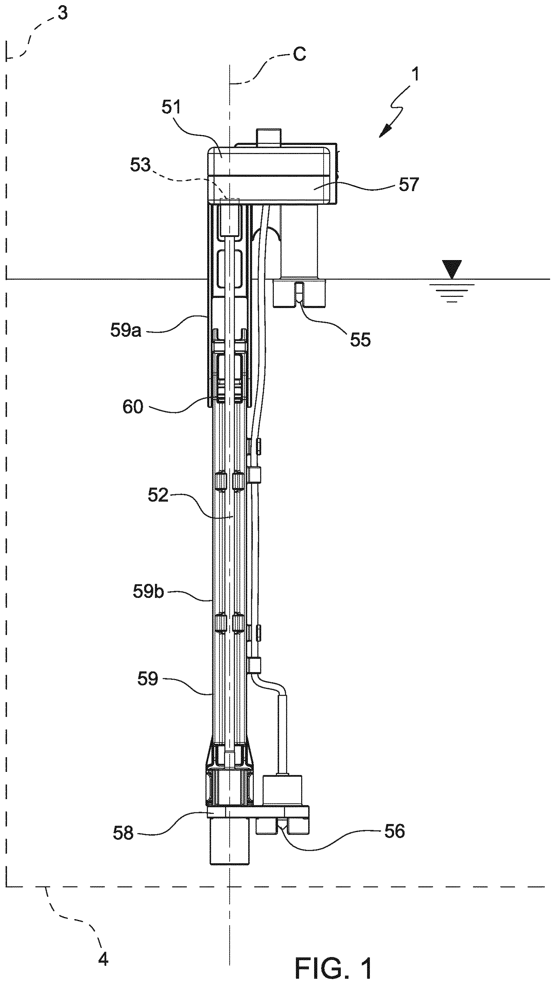

In Figure 1 reference numeral 1 globally denotes a monitoring system for liquid level detection in a tank 3.

The tank 3 may be of various types and intended for various applications. For example, but not necessarily, the tank 3 is a flush cistern of a sanitary appliance.

The tank 3 has a bottom wall 4 and contains a variable amount of liquid (e.g., water, but also other liquid), which reaches a variable level in the tank 3.

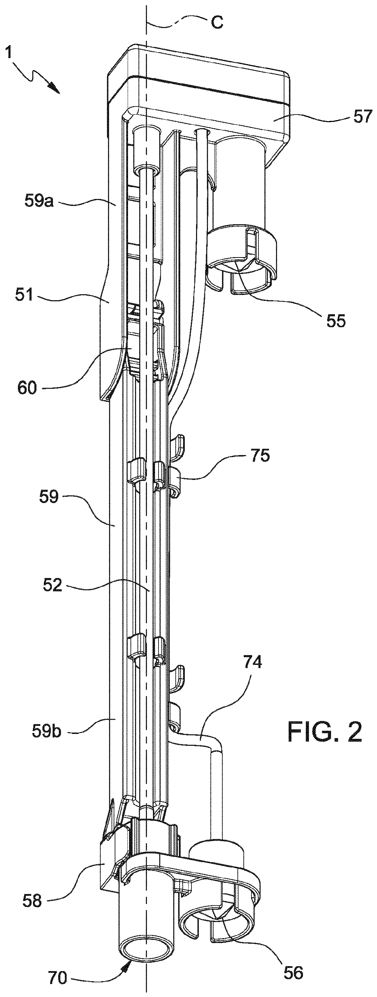

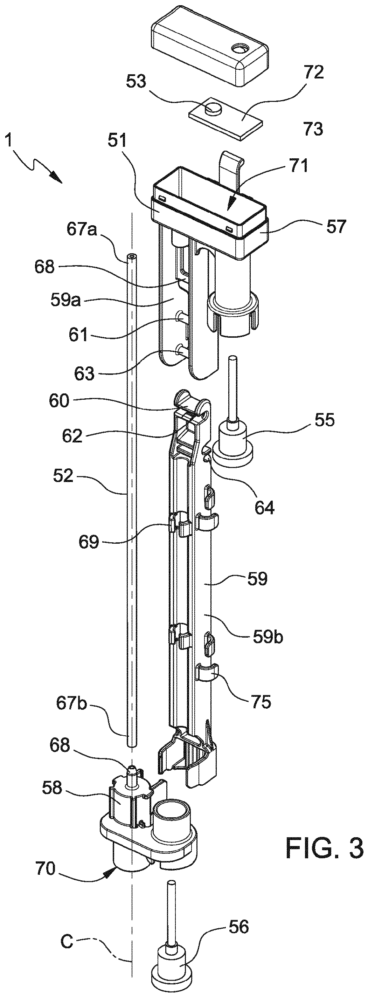

With reference also to Figures 2 and 3, the system 1 comprises a support body 51; a pipe 52 supported by the support body 51 and extending along an axis C; at least one pressure sensor 53; a pair of optical sensors 55, 56 positioned spaced apart from each other on the support body 51.

The support body 51 comprises a top portion 57 and a bottom portion 58 positioned at respective axially opposite ends of the support body 51, and a bar 59 extending between the portions 57, 58.

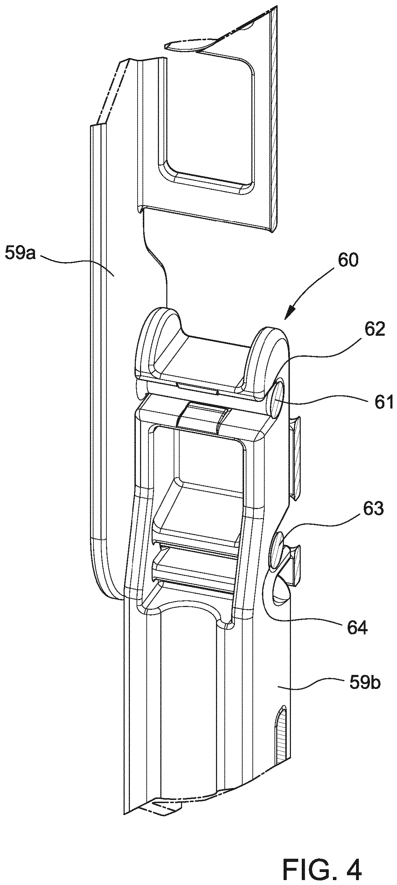

Preferably, the bar 59 comprises two sectors 59a, 59b articulated to each other by a hinge 60 (shown in detail in Figure 4), so that the bar 59 can fold by tilting the two sectors 59a, 59b relative to each other. Thus, if necessary, the articulated bar 59 allows for easy insertion of the system 1 through an opening in the tank 3.

In particular, the hinge 60 comprises a pin 61 engaging a rotation seat 62, on respective sectors 59a, 59b; and a stop member 63 engaging an abutment seat 64, formed on respective sectors 59a, 59b to limit the rotation of the sectors 59a, 59b relative to one another.

Advantageously, the two sectors 59a, 59b are also separable from each other by releasing the stop member 63 from the abutment seat 64 and pulling the pin 61 out of the rotation seat 62.

For example, the pipe 52 is a flexible tube, open at the lower end and above directly connected to the pressure sensor 53.

In particular, the pipe 52 has opposite open axial ends 67a, 67b and extends between the portions 57, 58 to which it is attached, for example, by respective fittings 68 inserted into the axial ends 67a, 67b. Optionally, the pipe 52 is also attached to the bar 59 by snap-on elements 69.

The opposite axial ends 67a, 67b communicate with an entrance 70 formed in the portion 58 and, respectively, with an interior chamber 71 of the portion 57.

The chamber 71 houses the pressure sensor 53 and a control unit 72 (e.g., a circuit board) controlling the pressure sensor 53 and the optical sensors 55, 56. Advantageously, the chamber 71 is liquid-tight sealed so as to have at least an IP67 equivalent degree of protection.

The pressure sensor 53 is located at the upper axial end 67a of the pipe 52 and closes the axial end 67a; the pipe 52 is fluid-tight sealed, being open only at the lower axial end 67b.

The pressure sensor 53 is configured to detect the atmospheric pressure and the pressure acting on the pressure sensor 53 through the pipe 52, i.e., the pressure of the fluid column inside the pipe 52 (air present in the pipe 52, pushed by the liquid rising in the pipe 52), to determine the liquid level inside the tank 3.

For example, the pressure sensor 53 has a flexible membrane that is sensitive to changes in pressure acting on the membrane and an integrated microprocessor detecting the displacements of the membrane due to pressure changes and translates them into signals that are sent to the control unit 72.

In a preferred embodiment, the pressure sensor 53 is a differential pressure sensor, configured so as to measure atmospheric pressure and the pressure of the fluid column in the pipe 52 and to calculate the difference between the two measured pressure values to calculate the level of liquid in the tank 3.

In one variation, the sensor assembly 27 comprises a pair of pressure sensors 53 configured to measure the pressure acting on the sensors 53 to calculate the liquid level in the tank 3. In particular, each sensor 53 has a flexible membrane that is sensitive to changes in pressure acting on the membrane and an integrated microprocessor detecting displacements of the membrane due to pressure changes and translates them into signals that are sent to the control unit 72. A first sensor 53 detects atmospheric pressure, being positioned above the filling level of the tank 3 with the membrane exposed to atmospheric air; a second sensor 53 detects pressure at the bottom of the tank 3 and is immersed in the liquid contained in the tank 3, or is positioned at the upper end 67a of the pipe 52 in contact with the column of air inside the pipe 52.

Advantageously, both sensors 53 are in any case positioned in the upper portion 57 of the sensor assembly 27, above the filling level of the tank 3, and the pressure at the bottom of the tank 3 is detected, as described above, through the fluid column in the pipe 52 directly in contact with one of the sensors 53.

In this case also, the sensors 53 are configured to calculate the liquid level in the tank 3 by means of differential pressure values detected by the first sensor 53, exposed to atmospheric pressure, and the second sensor 53, in contact with the column of air contained in the pipe 52.

The support body 51 is equipped with a hook 73, or other fastener, for securing the support body 51 and thus the system 1 as a whole inside the tank 3. For example, the hook 73 extends from a side wall of the portion 57 and engages a corresponding seat (not shown) formed inside the tank 3.

The optical sensors 55, 56 are positioned on the support body 51 axially spaced apart from each other. For example, the optical sensors 55, 56 are positioned on the portion 57 and the portion 58, respectively.

The optical sensors 55, 56 face downwards, i.e., towards the bottom wall 4 of the tank 3, so as to detect the presence of a liquid level below them.

For example, the optical sensors 55, 56 are on-off type optical sensors emitting infrared radiation to detect the presence of liquid at the respective position (height).

The optical sensors 55, 56 are connected to the control unit 72, for example, via cables 74. In particular, the lower optical sensor 56 is connected to the control unit 72 by a cable 74 that is optionally guided by a plurality of fastenings 75 located along the bar 59.

It is understood that the pressure sensor 53 and/or the optical sensors 55, 56 may also be connected to the control unit 72 wirelessly.

The control unit 72 is then advantageously equipped with a wireless device for exchanging (receiving and transmitting) data with the outside world, for example with a user interface device and/or a remote server, which stores and processes the data sent by the control unit 72.

Advantageously, to adapt the system 1 to different tanks 3 of various sizes (in particular, having different depths or heights), the system 1 has a common upper portion (formed by the portion 57 and the first sector 59a of the bar 59), and a lower portion (formed by the portion 58 and the sector 59b) which is made depending on the tank 3 it is to be fitted to and in particular with a sector 59b of varying lengths to adapt to different tanks 3, in order to keep the lower optical sensor 56 as close as possible to the bottom wall 4 of the tank 3.

In general, the support body 51 is shaped so that the optical sensor 56 is positioned near the bottom wall 4 of the tank 3; while the optical sensor 55 and the pressure sensor 53 are positioned above the normal maximum filling level of the tank 3 (Figure 1).

In use, the liquid level in the tank 3 is measured by the system 1: the liquid in the tank 3 also enters the pipe 52 through the inlet 65 and compresses the air column inside the tube 52. The pressure sensor 53 measures the pressure of the fluid column (column of air) inside the pipe 52 and thus the pressure at the bottom of the tank 3, from which the liquid level in the tank 3 is derived.

The optical sensors 55, 56 detect the presence of liquid at two predetermined spatial positions and thereby allow the calibration of the pressure sensor 53 in two known reference operating conditions.

The combined use of the pressure sensor 53 and the two optical sensors 55, 56 allows the system 1 to accurately detect the liquid level and self-calibrate without external intervention.

In particular, the optical sensors 55, 56 detect whether the tank 3 is full or empty, i.e., whether the tank 3 contains liquid at two predetermined reference levels: if the upper optical sensor 55 detects liquid at its position, the tank 3 is full; if the optical sensor 56 detects no liquid below it, the tank 3 is empty.

The optical sensors 55, 56 communicate to the control unit 72 when the tank 3 is full or empty, and the control unit 72 may accordingly calibrate the pressure sensor 53 whenever necessary (e.g., after each tank emptying and filling cycle). The pressure sensor 53 is thus constantly calibrated, without the need for operator calibration.

In this way, the sensor assembly 27 is completely self-contained and does not require periodic manual calibration.

The user can read off the level values at any time with high accuracy, with an indicative tolerance of +/- 0.2 mm.

The system 1 can thus operate with high durability and provide data on any problems and malfunctions, such as leaks, overfilling, operating problems, overflow events, and provide consumption measurements, performance delivered, and so on.

It is clear that the monitoring system described and illustrated may be subject to modifications and variations without departing from the scope of the appended claims.

## Claims

1. A monitoring system (1) for liquid level detection in a tank (3), comprising a support body (51) supporting at least one pressure sensor (53) configured for measuring a liquid level in the tank (3), and a control unit (72) connected to the pressure sensor (53); the system (1) being **characterized by** comprising a pair of optical sensors (55, 56) positioned spaced apart from each other on the support body (51) and connected to the control unit (72); and in that the control unit (72) is configured so as to calibrate the pressure sensor (53) according to data provided by the optical sensors (55, 56).

2. The system according to claim 1, wherein the optical sensors (55, 56) are configured so as to detect the presence of liquid in two respective predetermined spatial positions and in respective reference operating conditions; and the control unit (72) is configured so as to calibrate the pressure sensor (53) according to the data provided by the optical sensors (55, 56) in the two reference operating conditions.

3. The system according to claim 1 or 2, wherein the pressure sensor (53) is positioned at an upper axial end (67a) of a pipe (52) supported by the support body (51) and having a lower axial end (67b) which is open and in fluid communication, in use, with the tank (3); the pressure sensor (53) being configured so as to detect the pressure of a fluid column inside the pipe (52) and accordingly calculate the level of liquid in the tank (3).

4. The system according to claim 3, wherein the pressure sensor (53) is a differential pressure sensor, configured so as to measure atmospheric pressure and the pressure of the fluid column in the pipe (52) and use the difference between the two measured pressure values to calculate the level of liquid in the tank (1).

5. The system according to claim 3 or 4, wherein the support body (51) comprises a top portion (57) and a bottom portion (58), positioned at respective axially opposite ends of the support body (51), and a bar (59) extending between said portions (57, 58) and made up of two sectors (59a, 59b) articulated to each other by a hinge (60) so as the two sectors (59a, 59b) can rotate with respect to each other to allow an easy insertion of the system (1) through an access opening of the tank (3).

6. The system according to claim 5, wherein a first optical sensor (55) and the pressure sensor (53) are arranged on the top portion (57), so as to be positioned in use above a maximum filling level of the tank (3); and a second optical sensor (56) is arranged on the bottom portion (58), so as to be positioned in use in proximity of a bottom wall (7) of the tank (3).

7. The system according to one of the preceding claims, wherein the pressure sensor (53) and the control unit (72) are housed in a chamber (71) which is liquid-tight sealed, with an IP67 equivalent degree of protection.

8. The system according to claim 7, wherein also the optical sensors (55, 56) have an IP67 equivalent degree of protection.

## Patentansprüche

1. Überwachungssystem (1) zur Erfassung des Flüssigkeitsstands in einem Tank (3), mit einem Trägerkörper (51), der mindestens einen Drucksensor (53) trägt, der zum Messen eines Flüssigkeitsstands in dem Tank (3) konfiguriert ist, und einer Steuereinheit (72), die mit dem Drucksensor (53) verbunden ist; wobei das System (1) **dadurch gekennzeichnet ist, dass** es ein Paar optischer Sensoren (55, 56) umfasst, die voneinander beabstandet auf dem Trägerkörper (51) positioniert und mit der Steuereinheit (72) verbunden sind; und dadurch, dass die Steuereinheit (72) so konfiguriert ist, dass sie den Drucksensor (53) gemäß den von den optischen Sensoren (55, 56) bereitgestellten Daten kalibriert.

2. System nach Anspruch 1, wobei die optischen Sensoren (55, 56) so konfiguriert sind, dass sie das Vorhandensein von Flüssigkeit in zwei jeweiligen vorbestimmten räumlichen Positionen und in jeweiligen Referenzbetriebsbedingungen erfassen; und die Steuereinheit (72) ist so konfiguriert, dass sie den Drucksensor (53) gemäß den von den optischen Sensoren (55, 56) in den zwei Referenzbetriebsbedingungen bereitgestellten Daten kalibriert.

3. System nach Anspruch 1 oder 2, wobei der Drucksensor (53) an einem oberen axialen Ende (67a) eines Rohrs (52) positioniert ist, das von dem Trägerkörper (51) getragen wird und ein unteres axiales Ende (67b) aufweist, das offen ist und im Gebrauch in Fluidkommunikation mit dem Tank (3) steht; wobei der Drucksensor (53) so konfiguriert ist, dass er den Druck einer Fluidsäule im Inneren des Rohrs (52) erfasst und dementsprechend den Flüssigkeitsstand in dem Tank (3) berechnet.

4. System nach Anspruch 3, wobei der Drucksensor (53) ein Differenzdrucksensor ist, der so konfiguriert ist, dass er den atmosphärischen Druck und den Druck der Flüssigkeitssäule in dem Rohr (52) misst und die Differenz zwischen den zwei gemessenen Druckwerten zur Berechnung des Flüssigkeitsstands im Tank (1) verwendet.

5. System nach Anspruch 3 oder 4, wobei der Trägerkörper (51) einen oberseitigen Abschnitt (57) und einen unterseitigen Abschnitt (58), die an den jeweiligen axial gegenüberliegenden Enden des Trägerkörpers (51) positioniert sind, und eine Stange (59) umfasst, die sich zwischen den Abschnitten (57, 58) erstreckt und aus zwei Sektoren (59a, 59b) besteht, die durch ein Scharnier (60) aneinander angelenkt sind, so dass sich die zwei Sektoren (59a, 59b) in Bezug aufeinander drehen können, um ein einfaches Einführen des Systems (1) durch eine Zugangsöffnung des Tanks (3) zu ermöglichen.

6. System nach Anspruch 5, wobei ein erster optischer Sensor (55) und der Drucksensor (53) am oberseitigen Abschnitt (57) so angeordnet sind, dass sie im Gebrauch oberhalb eines maximalen Füllstands des Tanks (3) positioniert sind; und ein zweiter optischer Sensor (56) ist am unterseitigen Abschnitt (58) so angeordnet, dass er im Gebrauch in der Nähe einer Bodenwand (7) des Tanks (3) positioniert ist.

7. System nach einem der vorhergehenden Ansprüche, wobei der Drucksensor (53) und die Steuereinheit (72) in einer Kammer (71) untergebracht sind, die mit einem IP67-äquivalenten Schutzgrad flüssigkeitsdicht verschlossen ist.

8. System nach Anspruch 7, wobei auch die optischen Sensoren (55, 56) einen IP67-äquivalenten Schutzgrad aufweisen.

## Revendications

1. Système de surveillance (1) de détection de niveau de liquide dans un réservoir (3), comprenant un corps de support (51) supportant au moins un capteur de pression (53) configuré pour mesurer un niveau de liquide dans le réservoir (3), et une unité de commande (72) reliée au capteur de pression (53) ; le système (1) étant **caractérisé en ce qu'**il comprend une paire de capteurs optiques (55, 56) positionnés de façon espacée l'un de l'autre sur le corps de support (51) et reliés à l'unité de commande (72) ; et **en ce que** l'unité de commande (72) est configurée de manière à étalonner le capteur de pression (53) selon des données fournies par les capteurs optiques (55, 56).

2. Système selon la revendication 1, les capteurs optiques (55, 56) étant configurés pour détecter la présence de liquide dans deux positions spatiales respectives prédéterminées et dans des conditions de fonctionnement de référence respectives ; et l'unité de commande (72) est configurée de sorte à étalonner le capteur de pression (53) selon les données fournies par les capteurs optiques (55, 56) dans les deux conditions de fonctionnement de référence.

3. Système selon la revendication 1 ou 2, le capteur de pression (53) étant positionné à une extrémité axiale supérieure (67a) d'un tuyau (52) supporté par le corps de support (51) et comportant une extrémité axiale inférieure (67b) qui est ouverte et en communication fluidique, lors de l'utilisation, avec le réservoir (3) ; le capteur de pression (53) étant configuré de manière à détecter la pression d'une colonne de fluide à l'intérieur du tuyau (52) et à calculer, en conséquence, le niveau de liquide dans le réservoir (3).

4. Système selon la revendication 3, le capteur de pression (53) étant un capteur de pression différentielle, configuré de manière à mesurer la pression atmosphérique et la pression de la colonne de fluide dans le tuyau (52) et à utiliser la différence entre les deux valeurs de pression mesurées pour calculer le niveau de liquide dans le réservoir (1).

5. Système selon la revendication 3 ou 4, le corps de support (51) comprenant une partie supérieure (57) et une partie inférieure (58), positionnées aux extrémités respectives axialement opposées du corps de support (51), et une barre (59) s'étendant entre lesdites parties (57, 58) et constituée de deux secteurs (59a, 59b) articulés l'un à l'autre par une charnière (60) de sorte que les deux secteurs (59a, 59b) peuvent tourner l'un par rapport à l'autre pour permettre une introduction facile du système (1) à travers une ouverture d'accès du réservoir (3).

6. Système selon la revendication 5, un premier capteur optique (55) et le capteur de pression (53) étant disposés sur la partie supérieure (57), de manière à être positionnés, lors de l'utilisation, au-dessus d'un niveau de remplissage maximum du réservoir (3) ; et un second capteur optique (56) est disposé sur la partie inférieure (58), de manière à être positionné, lors de l'utilisation, à proximité d'une paroi inférieure (7) du réservoir (3).

7. Système selon l'une des revendications précédentes, le capteur de pression (53) et l'unité de commande (72) étant logés dans une chambre (71) étant scellée de manière étanche, avec un indice de protection équivalent à IP67.

8. Système selon la revendication 7, les capteurs optiques (55, 56) ayant également un indice de protection équivalent à IP67.
